# EUROPEAN PATENT SPECIFICATION

(11) **EP 4 157 617 B1**
(45) Date of publication and mention of the grant of the patent: **09.10.2024**
(21) Application number: 20728708.7
(22) Date of filing: 25.05.2020
(51) Int. Cl.: B29C 70/48, B29C 70/86, B29C 70/52, B29D 99/00, B29B 11/16

(54) **METHOD OF MANUFACTORING A SPAR CAP FOR A WIND TURBINE BLADE PART**
VERFAHREN ZUR HERSTELLUNG EINES HOLMGURTS FÜR EIN WINDTURBINENSCHAUFELTEIL
MÉTHODE DE FABRICATION D'UNE SEMELLE DE LONGERON POUR UNE PARTIE DE PALE D'ÉOLIENNE

(43) Date of publication of application: 05.04.2023
(73) Proprietor: LM Wind Power A/S, 6000 Kolding (DK); Blade Dynamics LLLP, New Orleans, LA 70129 (US)
(72) Inventor: HANRAHAN, Kristen, New Orleans (US); HUNTER, Justin, New Orleans (US); BOON, Christopher, Eastleigh Hampshire SO53 4SE (GB); KNOBLOCK, Tanner, New Orleans, LA 70129 (US); KNOBLOCK, Jasper, New Orleans, LA 70129 (US)
(74) Representative: COPA Copenhagen Patents
(86) International application number: PCT/EP2020/064412
(87) International publication number: WO 2021/239207

(56) References cited:
- EP-A1- 3 330 529
- WO-A1-2016/015736
- DE-A1- 102017 113 769
- US-A1- 2012 027 609

## Description

### FIELD OF THE INVENTION

The present invention relates to manufacturing of spar cap for a wind turbine blade.

### BACKGROUND OF THE INVENTION

Wind power is a clean and environmentally friendly source of energy. Wind turbines usually comprise a tower, generator, gearbox, nacelle, and one or more rotor blades. The wind turbine blades capture kinetic energy of wind using known airfoil principles. Modern wind turbines may have rotor blades that exceed 90 meters in length.

Wind turbine blades are usually manufactured by forming two shell parts or shell halves from layers of woven fabric or fibre and resin. Spar caps or main laminates are placed or integrated in the shell halves and may be combined with shear webs or spar beams to form structural support. Spar caps or main laminates may be joined to, or integrated within, the inside of the halves of the shell.

A number of manufacturing steps become more complicated as the blades increase in size. Any mistake made somewhere in the process is increasingly more time consuming to correct. One such process step is precise laying of fibres layers and precured elements on fibre layers already laid up in a blade part mould. Additionally, it is a problem to provide the spar cap with the desired dimensions and tolerances especially of the width and thickness. The width thickness and length of the spar cap usually increase with the size of the blade.

When manufacturing a wind turbine blade shell part, layers of dry fibre, such as fibre mats, are typically laid up first in a blade shell part mould. These layers will constitute the outer skin of the shell part. After adding the fibre layers, additional layers forming part of the spar cap, one or more precured elements can be added, forming a further part of the spar cap blade shell part. Spar caps are advantageously provided using this method. Adding the additional layers and the precured elements onto the outer skin fibre layers is tedious, and often the fibre layers get displaced or wrinkled or misplaced, thereby reducing the dimensional tolerances and the quality of the spar and the wind turbine blade shell and thereby probably also the complete blade shell.

WO 2016/015736 A1 discloses a method and system for manufacture of a wind turbine blade by providing a plurality of precured elongate elements of a fibre reinforced resin composite material, stacking the plurality of precured elements with an interlayers of an elongate non-cured fibre material, thereby forming a stack of precured elements and interlayers and infusing resin into the stack of precured elements and interlayers in the mould.

It is therefore desirable to provide a method of manufacturing eliminating or reducing the drawbacks of known methods and provide an effective and reliable method of manufacturing spar caps of the desired dimensions and tolerances.

The present invention provides a method of manufacturing as defined in claim 1 as well as a system for manufacturing as defined in claim 15, eliminating or reducing the drawbacks of known methods.

### SUMMARY OF THE INVENTION

The present invention provides a method of manufacturing a spar cap for a wind turbine blade part, comprising the steps of:
- providing a plurality of precured elongate elements of a fibre reinforced resin composite material comprising a first main surface and a second opposite main surface and a first lateral face and a second opposite lateral face and a first end and an opposite second end
- stacking the plurality of precured elements, an interlayer of an elongate non-cured fibre material being arranged between the first and second main surface of successive precured elements, thereby forming a stack of precured elements and interlayer(s), the stack having a lower stack surface and an opposite upper stack surface, a first lateral stack face and an opposite second lateral stack face, and a first stack end and an opposite second stack end
- moving the stack of precured elements and interlayer(s) to a spar cap mould comprising a mould bottom and mould side walls,
- arranging the stack of precured elements and interlayer(s) in the cavity of the spar cap mould
- infusing resin into the stack of precured elements and interlayers in the mould
- allow the resin to cure to form a cured stack of precured elements and interlayer(s) forming a spar cap
- remove the cured stack of precured elements and interlayer(s) in from the mould, i.e. demould the stack

The present invention provides for a spar cap having dimensions with close tolerances as the spar cap is moulded in a spar cap mould maintaining the cured elements and the interlayer(s) in the desired position and preventing displacement thereof.

The plurality of precured elements can be stacked in a single row or in two or more rows of precured elements arranged laterally adjacent each other

According to an embodiment the precured elements comprise carbon fibres and/or glass fibres

According to a further embodiment the resin of resin composite material of the precured elements is epoxy resin, vinyl ester resin or polyester resin

According to an additional embodiment the resin infused into the stack of precured elements and interlayer(s) is of the same type as the resin of the precured elements.

The resin infused into the stack of precured elements and interlayer(s) can also be of a type different from the resin of the precured elements.

According to an at present preferred embodiment the precured elements are plank-shaped or strip-shaped

According to an additional at present preferred embodiment the plurality of precured elements are pultruded elements.

The fibres of the fibres material of the interlayer(s) can comprise glass fibres and/or carbon fibres.

In an embodiment the step of stacking of the precured elements to form a stack of precured elements and interlayer(s) comprises:
- aligning at least the lateral faces of the precured elements and keep them aligned by means of longitudinally mutually spaced loose stack clamping devices, preferably surrounding the stack of precured elements and interlayer(s).

Thereby it is advantageously obtained that the cured elements and the interlayer(s) are arranged precisely aligned when arranged in the mould and the dimensional tolerances improved

According to an embodiment the step of moving the stack of precured elements and interlayer(s) to a spar cap mould comprises:
- connecting a lifting device such as a lifting beam to the loose stack clamping devices and move the stack of precured elements and interlayer(s) to the mould by means of the lifting device.

According to a further embodiment the step of arranging the stack of precured elements and Interlayer(s) in the cavity of the spar cap mould comprises:
- arranging the stack above the mould cavity of the spar cap mould, and
- gradually bringing the lower stack surface of the stack into contact with the surface of the mould bottom of the mould cavity, preferably starting at the first stack end and ending at the opposite second stack end, and simultaneously gradually removing the mutually spaced loose stack clamping devices from the stack before contacting the bottom of the mould, preferably starting from the loose stack clamping device closest to the first stack end and ending at the loose stack clamping device closest to the opposite second stack end.

According to an additional embodiment the step of arranging the stack of precured elements and interlayer(s) in the cavity of the spar cap mould comprises:
- arranging the stack above and preferably vertically in line with the mould cavity of the spar cap mould on a plurality of longitudinally mutually spaced support members, each support member supporting a stack portion, and removing the clamping devices from the stack, and
- gradually bringing the lower stack surface of the stack into contact with the surface of the mould bottom of the mould cavity, preferably starting at the first stack end and ending at the opposite second stack end, by simultaneously gradually removing the support members, preferably starting from the support member closest to the first stack end and ending at the support member closest to the opposite second stack end.

Thereby the stack can be gently and precisely lowered down onto the surface of the bottom.

All the clamping devices can be removed from the stack after the stack has been arranged on the support members. Alternatively, the clamping devices can be removed gradually from the stack simultaneously with the removal of the support members or gradually prior to the gradual removal of the support members.

According to an embodiment the support members extend transversely of the elongate spar cap mould and are supported by upper faces of side walls of the mould.

The support members can be cylindrical members.

According to an advantageous embodiment of the method of the present invention comprises coating the surfaces of the mould bottom and the side walls of the mould cavity by a slip coating, such as a peel ply, prior to arranging the stack of precured elements and interlayer(s) in the cavity of the spar cap mould.

According to a further advantageous embodiment the step of infusing resin into the stack of precured elements and interlayer(s) in the mould comprises: coating the upper surface of the stack of precured elements and interlayers with a peel coating, such as peel ply, and cover the cavity of the spar cap mould with a vacuum bag and infuse the resin by vacuum assisted resin transfer moulding (VARTM).

An embodiment of the present invention of the can comprise carrying out an inspection of the cured stack of precured elements and interlayer(s) after the cured stack has been removed from the spar cap mould, conduct any required repairs of the cured stack and send the stack to shell part mould or a storage.

The cured stack of elements and interlayer(s), i.e. the cap, can have a width in the range 30-800 mm, a thickness or height in the range of 10-200 mm and a length in the range 10-200 m

At the shell part mould the cured stack of cured elements and interlayer(s), i.e the spar cap, is placed on the desired place of one or more fibres layers arranged in the shell part mould and additional shell materials and consumables are added, where after the shell part is infused, such as by VARTM.

A second aspect of the present invention relates to a wind turbine blade being provided with a spar cap manufactured by the method according to the present invention.

A third aspect of the present invention related to a wind turbine rotor being provided with at least one blade being provided with a spar cap manufactured by a method according to the present invention.

A fourth aspect of the present invention relates to a wind turbine comprising a wind turbine rotor being provided with at least one blade being provided with a spar cap manufactured by a method according to the present invention.

### BRIEF DESCRIPTION OF THE FIGURES

Embodiments of the invention will be described in more detail in the following with regard to the accompanying figures. The figures show one way of implementing the present invention and are not to be construed as being limiting to other possible embodiments falling within the scope of the attached claim set.
Fig. 1 is a schematic view illustrating an exemplary wind turbine.
Fig. 2 is a schematic view illustrating an exemplary wind turbine blade.
Fig. 3 is a schematic view illustrating a cross-section of an exemplary wind turbine blade.
Fig. 4 is a schematic view of a loose stack of precured elongate elements of fibre reinforced resin composite material and interlayers of fibre material.
Fig. 5A is a schematic view illustrating in reduced scale a loose stack clamping device attached to the stack shown in Fig. 4.
Fig. 5B is a schematic view illustrating a lifting device in the form of a lifting beam connected to the loose stack clamping device shown in Fig. 5A.
Figs. 6A-6F is schematic views illustrating arranging the loose stack in a spar cap mould illustrate a method in accordance with an embodiment of the invention, for arranging precured elements on fibre layers arranged in a shell part mould.
Figs. 7 is a schematic view illustrating moulding of the loose stack in the spar cap mould for forming the spar cap.
Fig. 8 is a schematic view illustrating the moulded and cured spar cap removed from the spar cap mould.
Fig.9 is a schematic view illustrating the finished cured spar cap after removal of peel ply

### DETAILED DESCRIPTION OF THE INVENTION

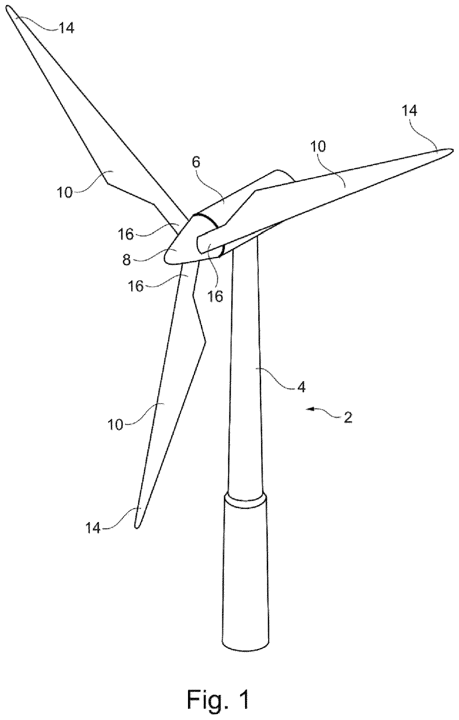

Fig. 1 illustrates a conventional modern upwind wind turbine 2 according to the so-called "Danish concept" with a tower 4, a nacelle 6 and a rotor with a substantially horizontal rotor shaft. The rotor includes a hub 8 and three blades 10 extending radially from the hub 8, each blade having a blade root 16 nearest the hub and a blade tip 14 furthest from the hub 8. The invention is not limited to use in wind turbines of this type.

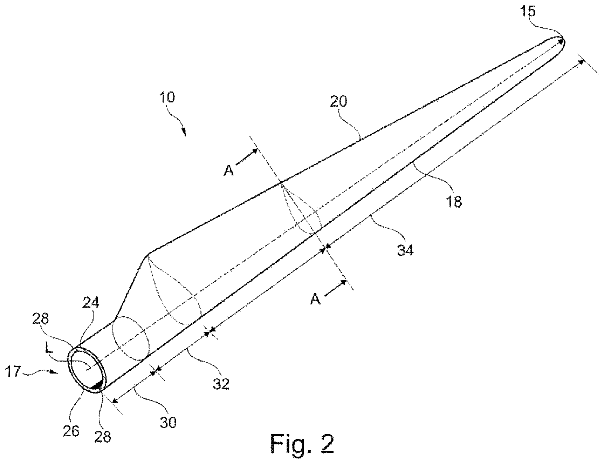

Fig. 2 shows a schematic view of an exemplary wind turbine blade 10. The wind turbine blade 10 has the shape of a conventional wind turbine blade with a root end 17 and a tip end 15 and comprises a root region 30 closest to the hub, a profiled or airfoil region 34, and a transition region 32 between the root region 30 and the airfoil region 34. The blade 10 comprises a leading edge 18 facing the direction of rotation of the blade 10, when the blade is mounted on the hub, and a trailing edge 20 facing the opposite direction of the leading edge 18.

The airfoil region 34 (also called the profiled region) preferably has an ideal shape with respect to generating hub rotation, whereas the root region 30 due to structural considerations has a substantially circular or elliptical cross-section, which for instance makes it easier and safer to mount the blade 10 to the hub. The diameter of the root region 30 may be constant along the entire root area 30. The transition region 32 present in the wind turbine blade 10 in this example has a transitional profile gradually changing from the circular shape of the root region 30 to the airfoil profile of the airfoil region 34. The chord length of the transition region 32 typically increases in an outward direction from the hub. The airfoil region 34 has an airfoil profile with a chord extending between the leading edge 18 and the trailing edge 20 of the blade 10.

It should be noted that different sections of the blade normally do not have a common plane, since the blade may be twisted and/or curved (i.e. pre-bent) along a direction from the root region to the tip, this being most often the case, for instance to more or less compensate for the local velocity of the blade being dependent on the distance from the hub.

The wind turbine blade 10 comprises a blade shell which may for instance comprise two blade shell parts, a first blade shell part 24 and a second blade shell part 26, for instance made at least partly of fibre-reinforced polymer. The first blade shell part 24 may for instance be part of a pressure side or upwind blade part. The second blade shell part 26 may for instance be part of a suction side or downwind blade part. The first blade shell part 24 and the second blade shell part 26 are typically joined together, such as glued together, along bond lines or glue joints 28 extending along the trailing edge 20 and the leading edge 18 of the blade 10. Typically, the root ends of the blade shell parts 24, 26 have a semi-circular or semi-oval outer cross-sectional shape that, when the first and second shell parts are joined, forms the root region, such as a circular or oval root region.

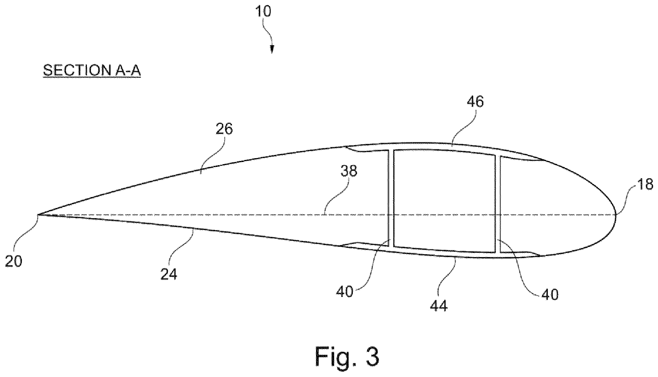

Fig. 3 is a schematic diagram illustrating a cross-sectional view of the exemplary wind turbine blade 10, corresponding to line A-A in Fig. 2. The wind turbine blade 10 comprises shear webs 40, a first spar cap 44 that is part of the pressure side 24 of the blade 10, and a second spar cap 46 that is part of the suction side 26 of the blade 10. The spar caps provide structural strength to the blade and typically extend along the blade in a spanwise direction. Typically, spar caps will extend over 60-95% of the blade length. The trailing edge 20 and leading edge 18 are also indicated in Fig. 3.

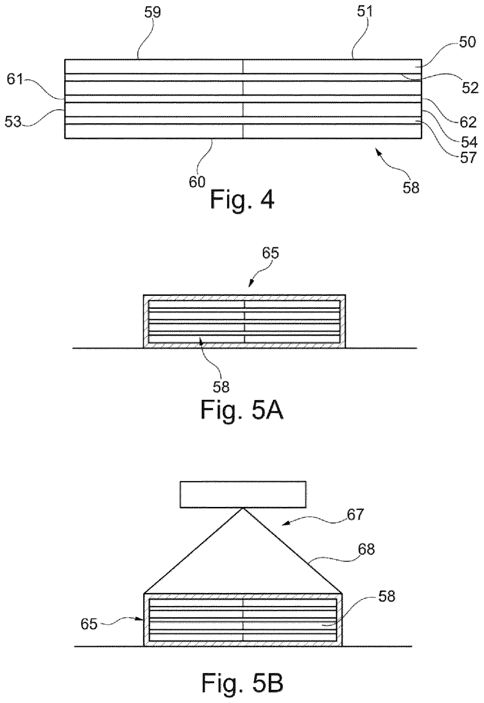

Fig. 4 illustrates a first step of the method according to the present invention for manufacturing a spar cap , such as the spar caps 44 and 46 in Fig.3 and where a plurality of precured elongate elements 50 of a fibre reinforced resin composite material are provided, preferably pultruded elements comprising carbon fibre. The precured elements 50 comprise a first main surface 51 and an opposite second main surface 52 and a first lateral face 53 and an opposite second lateral face 54 and a first end 55 and an opposite second end 56, not shown in Fig. 4. The precured elements 50 are stacked with an interlayer 57 of a non-cured fibre material between the first and second main surface 51,52 of successive precured elements 50, thereby forming a loose stack 58 of precured elements 50 and interlayers 57. The interlayers comprise carbon and/or glass fibres. In the embodiment shown the loose stack 58 comprises an array of two lateral adjacent rows, each comprising four elongate precured elements 50 separated by three interlayers 57. The loose stack 58 has an upper stack surface 59, an opposite lower stack surface 60, a first lateral stack face 61 and an opposite second lateral stack face 62 and a first stack end 63 and an opposite second stack end 64. The first and second stack end are not shown in Fig.4.

During stacking the precured elements 50 and interlayers 57 or after said stacking at least the lateral side walls 53,54 of the precured elements 50 are aligned and they are kept aligned by means of longitudinally spaced loose stack clamping devices 65. A loose stack clamping device 65 surrounding a loose stack 58 is illustrated in fig. 5A.

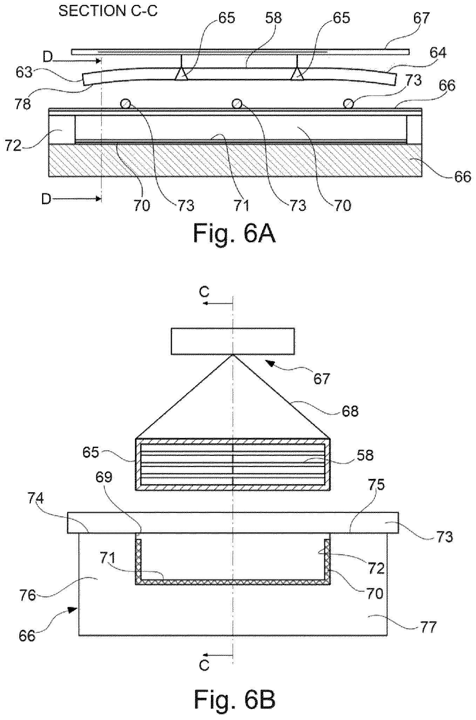

In the next step of the method of the present invention the loose stack 58 surrounded by the mutually spaced loose stack clamping devices 65 is moved to a spar cap mould 66 by connecting a lifting device, in the embodiment shown a lifting beam 67 with lifting ropes, to the loose stack clamping devices 65, as shown in Fig. 5B . The loose stack 58 is moved to the spar cap mould and arranged above the mould essentially vertically in line with the mould 66, as shown in Fig. 6A. Fig. 6A is a cross sectional view in reduced scale along the line C-C in Fig. 6B. Fig 6B is a view in enlarged scale along the line D-D in Fig. 6A.

The loose stack of precured elements 50 and interlayers 57 can now be brought into the cavity 69 of the mould. However, before that is done a peel ply 70 is applied on the bottom surface 71 and the side wall surfaces 72 of cavity 69 of the mould 66, as shown in Fig. 6A and 6B.

The loose stack 58 can be arranged in the cavity 69 of the mould by gradually bringing the lower stack surface 78 into contact with the bottom surface 71 of the mould 66 by gradually lowering the loose stack clamping devices 65 starting at the first stack end 63 and ending at the opposite second stack end 64 and simultaneously gradually removing the loose stack clamping devices starting at the clamping device closest to the first end 63 of the loose stack 58 and ending at the clamping device closest to the second end 54 of the loose stack 58.

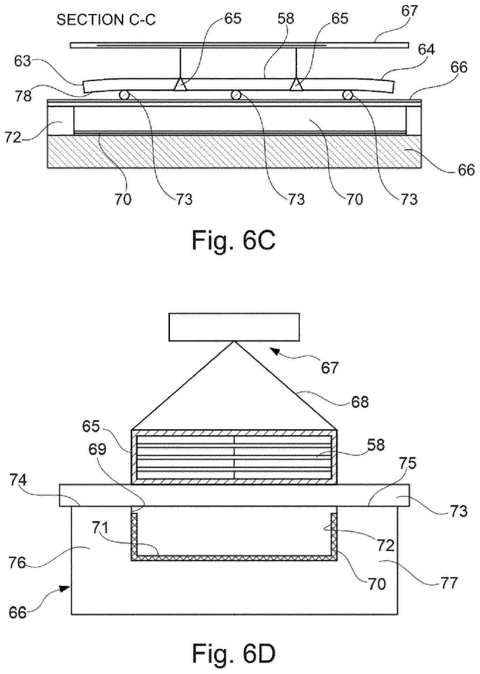

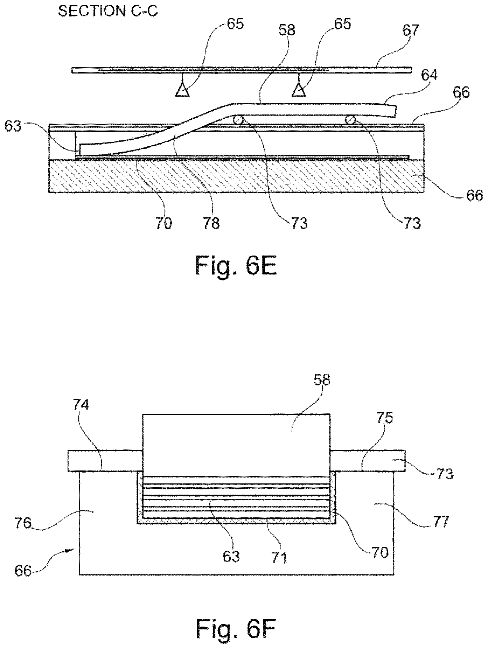

Alternatively, the loose stack can be arranged in the cavity 69 of the mould 66 by arranging a plurality of transversely extending and longitudinally mutually spaced support members in the form of cylindrical rollers 73 on the upper surfaces 74,75 of the side walls 76,77 of the mould 66. Thereafter the loose stack 58 can be lowered downwards to be supported by the plurality of longitudinally spaced rollers 73, as shown in Fig 6C and Fig. 6D. Each roller 73 supports a portion of the loose stack 58. The loose stack clamping devices 65 can now be removed from the loose stack. The lower surface 78 of the loose stack 58 is gradually brougt into contact with the surface 71 of the mould bottom of the mould cavity 69, starting at the first stack end 63 and ending at the opposite second stack end 64, by simultaneously gradually removing or displacing the rollers 73 starting from the roller closest to the first stack end 63 and ending at the support member closest to the opposite second stack end 64, as shown in Fig. 6E and Fig. 6F. Fig 6E and Fig. 6F disclose the situation where rollers 73 at the forward end of the loose stack 58 has been removed and the forward end of the loose stack has contacted the surface 71 of the bottom of the cavity 69 of the spar cap mould 66.

All the clamping devices 65 can be removed from the stack 58 after the stack has been arranged on the rollers 73. Alternatively, the clamping devices 65 can be removed gradually from the stack 58 simultaneously with the removal of the rollers 73 or gradually prior to the gradual removal of the rollers 73.

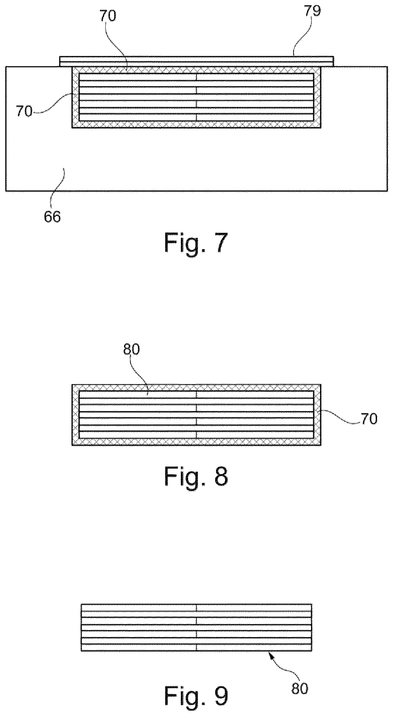

As shown in Fig 7 a peel ply 70 is arranged on the upper stack surface 59 when the entire length of the lose stack 58 has been arranged in the cavity 69 of the mould 66. Thereafter, the cavity is covered with a vacuum bag 79, vacuum is provided in the mould cavity and resin supplied to the mould cavity, i.e. resin is infused by vacuum assisted resin transfer moulding (VARTM). Subsequently the resin is allowed to cure, thereby forming the spar cap 80, and the cured stack of precured elements and interlayers is removed from the mould as a spar cap 80 surrounded by peel ply 70, as shown in Fig. 8.

Next the spar cap 80 can be inspected and required repair conducted and the spar cap 80 send to a shell part mould or a storage. Preferably the peel ply 70 is not removed from the spar cap 80 until the spar cap is to be used at the shell part mould. At the shell part mould the spar cap is placed on the desired place of one or more fibre layers arranged in the shell part mould and additional shell materials and consumables are added, where after the shell part is infused, such as by VARTM.

### List of references

- 2: wind turbine
- 4: tower
- 6: nacelle
- 8: hub
- 10: blade
- 14: blade tip
- 15: tip end
- 16: blade root
- 17: root end
- 18: leading edge
- 20: trailing edge
- 24: first blade shell part (pressure side)
- 26: second blade shell part (suction side)
- 28: bond lines/glue joints
- 30: root region
- 32: transition region
- 34: airfoil region
- 40: shear web
- 44: first spar cap
- 46: second spar cap
- 50: precured element
- 51: first main surface
- 52: second main face
- 53: first lateral face
- 54: second lateral surface
- 55: first end
- 56: second end
- 57: interlayer
- 58: loose stack
- 59: upper stack face
- 60: lower stack face
- 61: first lateral stack face
- 62: second lateral stack face
- 63: first stack end
- 64: second stack end
- 65: loose stack clamping device
- 66: spar cap mould
- 67: lifting beam
- 68: lifting ropes
- 69: cavity
- 70: peel ply
- 71: bottom surface
- 72: side wall surface
- 73: roller
- 74,75: upper surface
- 76,77: side wall
- 78: lower stack surface
- 79: vacuum bag
- 80: cured stack, spar cap

## Claims

1. Method of manufacturing a spar cap (80) for a wind turbine blade part (10), comprising the steps of:
- providing a plurality of precured elongate elements (50) of a fibre reinforced resin composite material comprising a first main surface (51) and a second opposite main surface (53) and a first lateral face (54) and a second opposite lateral face (63) and a first end and an opposite second end (56),
- stacking the plurality of precured elements, an interlayer (57) of an elongate non-cured fibre material being arranged between the first and second main surface of successive precured elements, thereby forming a stack (58) of precured elements (50) and interlayer(s), the stack having a lower stack surface (78, 79) and an opposite upper stack surface (59), a first lateral stack face (61, 62) and an opposite second lateral stack face (63), and a first stack end (64) and an opposite second stack end (65),
- moving the stack of precured elements and interlayer(s) to a spar cap mould comprising a mould bottom and mould side walls,
- arranging the stack of precured elements and interlayer(s) in the cavity of the spar cap mould I. (66)
- infusing resin into the stack of precured elements and interlayers in the mould,
- allow the resin to cure to form a cured stack of precured elements and interlayer(s) forming a spar cap,
- remove the cured stack of precured elements and interlayer(s) in from the mould, i.e. demould the stack.

2. Method according to claim 1, wherein the precured elements comprise carbon fibres and/or glass fibres.

3. Method according to any of the preceding claims, wherein the resin of the resin composite material of the precured elements is epoxy resin, vinyl ester resin or polyester resin.

4. Method according to any of the preceding claims, wherein the resin infused into the stack of precured elements and interlayer(s) is of the same type as the resin of the precured elements.

5. Method according to any of the preceding claims wherein the precured elements are plank-shaped or strip-shaped.

6. Method according to any of the preceding claims, wherein the plurality of precured elements are pultruded elements, and/or wherein the fibres of the fibres material of the interlayer(s) comprises glass fibres and/or carbon fibres.

7. Method of any of the preceding claims, wherein the step of stacking of the precured elements to form a stack of precured elements and interlayer(s) comprises:
- aligning at least the lateral faces of the precured elements and keep them aligned by means of longitudinally mutually spaced loose stack clamping devices, preferably surrounding the stack of precured elements and interlayer(s).

8. Method of any of the preceding claims, wherein the step of moving the stack of precured elements and interlayer(s) to a spar cap mould comprises:
- connecting a lifting device such as a lifting beam to the loose stack clamping devices and move the stack of precured elements and interlayer(s) to the mould by means of the lifting device.

9. Method of any of the preceding claims, wherein the step of arranging the stack of precured elements and interlayer(s) in the cavity of the spar cap mould comprises:
- arranging the stack above the mould cavity of the spar cap mould, and
- gradually bringing the lower stack surface of the stack into contact with the surface of the mould bottom of the mould cavity, preferably starting at the first stack end and ending at the opposite second stack end, and simultaneously gradually removing the mutually spaced loose stack clamping devices from the stack before contacting the bottom of the mould, preferably starting from the loose stack clamping device closest to the first stack end and ending at the loose stack clamping device closest to the opposite second stack end.

10. Method of any of the preceding claims 1 to 8, wherein arranging the stack of precured elements and interlayer(s) in the cavity of the spar cap mould comprises:
- arranging the stack above the mould cavity of the spar cap mould on a plurality of longitudinally mutually spaced support members, each support member supporting a stack portion, and removing the clamping devices from the stack, and
- gradually bringing the lower stack surface of the stack into contact with the surface of the mould bottom of the mould cavity, preferably starting at the first stack end and ending at the opposite second stack end, by simultaneously gradually removing the support members, preferably starting from the support member closest to the first stack end and ending at the support member closest to the opposite second stack end.

11. Method according to claim 10, wherein the support members extend transversely of the elongate spar cap mould and are supported by upper faces of side walls of the mould.

12. Method according to any of the preceding claims, comprising coating the surfaces of the mould bottom and the side walls of the mould cavity by a slip coating, such as a peel ply, prior to arranging the stack of precured elements and interlayer(s) in the cavity of the spar cap mould.

13. Method according to any of the preceding claims, wherein the step of infusing resin into the stack of precured elements and interlayer(s) in the mould comprises: coating the upper surface of the stack of precured elements and interlayers with a peel coating, such as peel ply, and cover the cavity of the spar cap mould with a vacuum bag and infuse the resin by vacuum assisted resin transfer moulding (VARTM).

14. Method of any of the preceding claims, comprising carrying out an inspection of the cured stack of precured elements and interlayer(s) after the cured stack has been removed from the spar cap mould, conduct any required repairs of the cured stack and send the stack to shell part mould or a storage.

15. System for manufacturing a spar cap (80) for a wind turbine blade part (10), the system being provided a plurality of precured elongate elements (50) of a fibre reinforced resin composite material comprising a first main surface (51) and a second opposite main surface (52) and a first lateral face (53) and a second opposite lateral face (55) and a first end (63) and an opposite second end (65), and wherein the plurality of precured elements are stacked with an interlayer (57) of an elongate non-cured fibre material being arranged between the first and second main surface of successive precured elements (50), thereby forming a stack (58) of precured elements and interlayer(s), the stack having a lower stack surface (79) and an opposite upper stack surface (59), a first lateral stack face (61) and an opposite second lateral stack face (63), and a first stack end (64) and an opposite second stack end (65), wherein at least the lateral faces of the precured elements are aligned and kept aligned by means of longitudinally mutually spaced loose stack clamping devices,
the system comprising:
- a spar cap mould (66, 67) comprising a mould bottom and mould side walls, and
- a lifting device such as a lifting beam (67, 68) adapted to move the stack of precured elements and interlayer(s),
wherein the system is adapted to:
- connect the lifting device to the loose stack clamping devices,
- move the stack (58) of precured elements (50) and interlayer(s) (57) with the lifting device, to the spar cap mould,
- arrange the stack of precured elements and interlayer(s) in the cavity of the spar cap mould,
- infuse resin into the stack of precured elements and interlayers in the mould,
- allow the resin to cure to form a cured stack of precured elements and interlayer(s) forming a spar cap,
- remove the cured stack of precured elements and interlayer(s) in from the mould, i.e. demould the stack.

## Patentansprüche

1. Verfahren zur Herstellung eines Holmgurts (80) für ein Windkraftanlagenblattteil (10), das die folgenden Schritte umfasst:
- Bereitstellen von mehreren vorgehärteten länglichen Elementen (50) aus einem faserverstärkten Harzverbundwerkstoff, die eine erste Hauptfläche (51) und eine zweite, entgegengesetzte Hauptfläche (53) und eine erste Seitenfläche (54) und eine zweite, entgegengesetzte Seitenfläche (63) und ein erstes Ende und ein entgegengesetztes zweites Ende (56) umfassen,
- Stapeln der mehreren vorgehärteten Elemente, einer Zwischenlage (57) aus einem länglichen, nicht ausgehärteten Fasermaterial, die zwischen der ersten und der zweiten Hauptfläche aufeinanderfolgender vorgehärteter Elemente angeordnet wird, wodurch ein Stapel (58) aus vorgehärteten Elementen (50) und Zwischenlage(n) gebildet wird, wobei der Stapel eine untere Stapeloberfläche (78, 79) und eine entgegengesetzte obere Stapeloberfläche (59), eine erste Stapelseitenfläche (61, 62) und eine entgegengesetzte zweite Stapelseitenfläche (63) und ein erstes Stapelende (64) und ein entgegengesetztes zweites Stapelende (65) aufweist,
- Bewegen des Stapels aus vorgehärteten Elementen und Zwischenlage(n) zu einer Holmgurtform, die einen Formboden und Formseitenwände umfasst,
- Anordnen des Stapels aus vorgehärteten Elementen und Zwischenlage(n) im Hohlraum der Holmgurtform (66),
- Einbringen von Harz durch Infusion in den Stapel aus vorgehärteten Elementen und Zwischenlagen in der Form,
- Aushärtenlassen des Harzes zum Bilden eines ausgehärteten Stapels aus vorgehärteten Elementen und Zwischenlage(n), der einen Holmgurt bildet,
- Entfernen des ausgehärteten Stapels aus vorgehärteten Elementen und Zwischenlage(n) aus der Form, d. h. Entformen des Stapels.

2. Verfahren nach Anspruch 1, wobei die vorgehärteten Elemente Kohlenstofffasern und/oder Glasfasern umfassen.

3. Verfahren nach einem der vorhergehenden Ansprüche, wobei das Harz des Harzverbundwerkstoffs der vorgehärteten Elemente Epoxidharz, Vinylesterharz oder Polyesterharz ist.

4. Verfahren nach einem der vorhergehenden Ansprüche, wobei das in den Stapel aus vorgehärteten Elementen und Zwischenlage(n) durch Infusion eingebrachte Harz vom gleichen Typ wie das Harz der vorgehärteten Elemente ist.

5. Verfahren nach einem der vorhergehenden Ansprüche, wobei die vorgehärteten Elemente bohlenförmig oder streifenförmig sind.

6. Verfahren nach einem der vorhergehenden Ansprüche, wobei die mehreren vorgehärteten Elemente pultrudierte Elemente sind und/oder wobei die Fasern des Fasermaterials der Zwischenlage(n) Glasfasern und/oder Kohlenstofffasern umfassen.

7. Verfahren nach einem der vorhergehenden Ansprüche, wobei der Schritt des Stapelns der vorgehärteten Elemente zum Bilden eines Stapels aus vorgehärteten Elementen und Zwischenlage(n) Folgendes umfasst:
- Ausrichten wenigstens der Seitenflächen der vorgehärteten Elemente und Ausgerichtethalten dieser mithilfe von längs voneinander beabstandeten Lose-Stapel-Klemmvorrichtungen, wobei sie den Stapel aus vorgehärteten Elementen und Zwischenlage(n) vorzugsweise umgeben.

8. Verfahren nach einem der vorhergehenden Ansprüche, wobei der Schritt des Bewegens des Stapels aus vorgehärteten Elementen und Zwischenlage(n) zu einer Holmgurtform Folgendes umfasst:
- Verbinden einer Hebevorrichtung, wie etwa eines Hebebalkens, mit den Lose-Stapel-Klemmvorrichtungen und Bewegen des Stapels aus vorgehärteten Elementen und Zwischenlage(n) mithilfe der Hebevorrichtung zu der Form.

9. Verfahren nach einem der vorhergehenden Ansprüche, wobei der Schritt des Anordnens des Stapels aus vorgehärteten Elementen und Zwischenlage(n) im Hohlraum der Holmgurtform Folgendes umfasst:
- Anordnen des Stapels über dem Formhohlraum der Holmgurtform und
- allmähliches Inkontaktbringen der unteren Stapeloberfläche des Stapels mit der Oberfläche des Formbodens des Formhohlraums, vorzugsweise ausgehend von dem ersten Stapelende und endend am entgegengesetzten zweiten Stapelende, und gleichzeitig allmähliches Entfernen der voneinander beabstandeten Lose-Stapel-Klemmvorrichtungen vom Stapel vor Kontakt mit dem Boden der Form, vorzugsweise ausgehend von der dem ersten Stapelende am nächsten befindlichen Lose-Stapel-Klemmvorrichtung und endend an der dem entgegengesetzten zweiten Stapelende am nächsten befindlichen Lose-Stapel-Klemmvorrichtung.

10. Verfahren nach einem der vorhergehenden Ansprüche 1 bis 8, wobei das Anordnen des Stapels aus vorgehärteten Elementen und Zwischenlage(n) im Hohlraum der Holmgurtform Folgendes umfasst:
- Anordnen des Stapels über dem Formhohlraum der Holmgurtform auf mehreren längs voneinander beabstandeten Stützelementen, wobei jedes Stützelement einen Stapelteil stützt, und Entfernen der Klemmvorrichtungen vom Stapel und
- allmähliches Inkontaktbringen der unteren Stapeloberfläche des Stapels mit der Oberfläche des Formbodens des Formhohlraums, vorzugsweise ausgehend vom ersten Stapelende und endend am entgegengesetzten zweiten Stapelende, durch gleichzeitiges allmähliches Entfernen der Stützelemente, vorzugsweise ausgehend von dem dem ersten Stapelende am nächsten befindlichen Stützelement und endend an dem dem entgegengesetzten zweiten Stapelende am nächsten befindlichen Stützelement.

11. Verfahren nach Anspruch 10, wobei die Stützelemente sich quer zur länglichen Holmgurtform erstrecken und von Oberseiten von Seitenwänden der Form getragen werden.

12. Verfahren nach einem der vorhergehenden Ansprüche, umfassend das Beschichten der Oberflächen des Formbodens und der Seitenwände des Formenhohlraums mit einer Gleitbeschichtung, wie etwa einer Peel Ply-Schicht, vor Anordnen des Stapels aus vorgehärteten Elementen und Zwischenlage(n) im Hohlraum der Holmgurtform.

13. Verfahren nach einem der vorhergehenden Ansprüche, wobei der Schritt des Einbringens von Harz durch Infusion in den Stapel aus vorgehärteten Elementen und Zwischenlage(n) in der Form Folgendes umfasst: Beschichten der oberen Oberfläche des Stapels aus vorgehärteten Elementen und Zwischenlagen mit einer Abziehbeschichtung, wie etwa Peel Ply, und Abdecken des Hohlraums der Holmgurtform mit einem Vakuumsack und Einbringen des Harzes durch Infusion durch vakuumunterstütztes Harzinfusionsformen (VARTM, Vacuum Assisted Resin Transfer Moulding).

14. Verfahren nach einem der vorhergehenden Ansprüche, umfassend das Durchführen einer Prüfung des ausgehärteten Stapels aus vorgehärteten Elementen und Zwischenlage(n) nach dem Entfernen des ausgehärteten Stapels aus der Holmgurtform, das Durchführen erforderlicher Reparaturen des ausgehärteten Stapels und das Senden des Stapels zu Schalenteilform oder einem Lager.

15. System zur Herstellung eines Holmgurts (80) für ein Windkraftanlagenblattteil (10), wobei dem System mehrere vorgehärtete längliche Elemente (50) aus einem faserverstärkten Harzverbundwerkstoff bereitgestellt werden, die eine erste Hauptfläche (51) und eine zweite, entgegengesetzte Hauptfläche (52) und eine erste Seitenfläche (53) und eine zweite, entgegengesetzte Seitenfläche (55) und ein erstes Ende (63) und ein entgegengesetztes zweites Ende (56) umfassen, und wobei die mehreren vorgehärteten Elemente mit einer Zwischenlage (57) aus einem länglichen, nicht ausgehärteten Fasermaterial, die zwischen der ersten und der zweiten Hauptfläche aufeinanderfolgender vorgehärteter Elemente (50) angeordnet wird, gestapelt werden, wodurch ein Stapel (58) aus vorgehärteten Elementen und Zwischenlage(n) gebildet wird, wobei der Stapel eine untere Stapeloberfläche (79) und eine entgegengesetzte obere Stapeloberfläche (59), eine erste Stapelseitenfläche (61) und eine entgegengesetzte zweite Stapelseitenfläche (63) und ein erstes Stapelende (64) und ein entgegengesetztes zweites Stapelende (65) aufweist,
wobei wenigstens die Seitenflächen der vorgehärteten Elemente ausgerichtet werden und mithilfe von längs voneinander beabstandeten Lose-Stapel-Klemmvorrichtungen ausgerichtet gehalten werden,
wobei das System Folgendes umfasst:
- eine Holmgurtform (66, 67), die einen Formboden und Formseitenwände umfasst, und
- eine Hebevorrichtung, wie etwa einen Hebebalken (67, 68), die zum Bewegen des Stapels aus vorgehärteten Elementen und Zwischenlage(n) eingerichtet ist,
wobei das System eingerichtet ist zum:
- Verbinden der Hebevorrichtung mit den Lose-Stapel-Klemmvorrichtungen,
- Bewegen des Stapels (58) aus vorgehärteten Elementen (50) und Zwischenlage(n) (57) mit der Hebevorrichtung zur Holmgurtform,
- Anordnen des Stapels aus vorgehärteten Elementen und Zwischenlage(n) im Hohlraum der Holmgurtform,
- Einbringen von Harz durch Infusion in den Stapel aus vorgehärteten Elementen und Zwischenlagen in der Form,
- Aushärtenlassen des Harzes zum Bilden eines ausgehärteten Stapels aus vorgehärteten Elementen und Zwischenlage(n), der einen Holmgurt bildet,
- Entfernen des ausgehärteten Stapels aus vorgehärteten Elementen und Zwischenlage(n) aus der Form, d. h. Entformen des Stapels,

## Revendications

1. Procédé de fabrication d'une semelle de longeron (80) pour une partie formant pale d'éolienne (10), comportant les étapes consistant à :
- fournir une pluralité d'éléments allongés prédurcis (50) d'un matériau composite de résine renforcé de fibres comportant une première surface principale (51) et une deuxième surface principale opposée (53) et une première face latérale (54) et une deuxième face latérale opposée (63) et une première extrémité et une deuxième extrémité opposée (56),
- empiler la pluralité d'éléments prédurcis, une couche intermédiaire (57) d'un matériau fibreux allongé non durci étant agencée entre la première surface principale et la deuxième surface principale d'éléments prédurcis successifs, pour ainsi former une pile (58) constituée d'éléments prédurcis (50) et d'une (ou de) couche(s) intermédiaire(s), la pile ayant une surface de pile inférieure (78, 79) et une surface de pile supérieure opposée (59), une première face de pile latérale (61, 62) et une deuxième face de pile latérale opposée (63), et une première extrémité de pile (64) et une deuxième extrémité de pile opposée (65),
- déplacer la pile constituée d'éléments prédurcis et d'une (ou de) couche(s) intermédiaire(s) jusqu'au niveau d'un moule de semelle de longeron comportant une partie inférieure de moule et des parois latérales de moule,
- agencer la pile constituée d'éléments prédurcis et d'une (ou de) couche(s) intermédiaire(s) dans la cavité du moule de semelle de longeron (66),
- infuser de la résine jusque dans la pile constituée d'éléments prédurcis et de couches intermédiaires dans le moule,
- laisser la résine durcir pour former une pile durcie constituée d'éléments prédurcis et d'une (ou de) couche(s) intermédiaire(s) formant une semelle de longeron,
- retirer la pile durcie constituée d'éléments prédurcis et d'une (ou de) couche(s) intermédiaire(s) du moule, c.-à-d. démouler la pile.

2. Procédé selon la revendication 1, dans lequel les éléments prédurcis comportent des fibres de carbone et/ou des fibres de verre.

3. Procédé selon l'une quelconque des revendications précédentes, dans lequel la résine du matériau composite de résine des éléments prédurcis est de la résine époxy, de la résine ester vinylique ou de la résine polyester.

4. Procédé selon l'une quelconque des revendications précédentes, dans lequel la résine infusée jusque dans la pile constituée d'éléments prédurcis et d'une (ou de) couche(s) intermédiaire(s) est du même type que la résine des éléments prédurcis.

5. Procédé selon l'une quelconque des revendications précédentes, dans lequel les éléments prédurcis sont en forme de planche ou en forme de bande.

6. Procédé selon l'une quelconque des revendications précédentes, dans lequel les éléments prédurcis de la pluralité d'éléments prédurcis sont des éléments pultrudés, et/ou dans lequel les fibres du matériau fibreux de la (ou des) couche(s) intermédiaire(s) comportent des fibres de verre et/ou des fibres de carbone.

7. Procédé selon l'une quelconque des revendications précédentes, dans lequel l'étape consistant à empiler les éléments prédurcis pour former une pile constituée d'éléments prédurcis et d'une (ou de) couche(s) intermédiaire(s) comporte les étapes consistant à :
- aligner au moins les faces latérales des éléments prédurcis et les maintenir alignées au moyen de dispositifs de serrage de pile lâche espacés longitudinalement les uns par rapport aux autres, en entourant de préférence la pile constituée d'éléments prédurcis et d'une (ou de) couche(s) intermédiaire(s).

8. Procédé selon l'une quelconque des revendications précédentes, dans lequel l'étape consistant à déplacer la pile constituée d'éléments prédurcis et d'une (ou de) couche(s) intermédiaire(s) jusqu'au niveau d'un moule de semelle de longeron comporte les étapes consistant à :
- relier un dispositif de levage tel qu'une poutre de levage aux dispositifs de serrage de pile lâche et déplacer la pile constituée d'éléments prédurcis et d'une (ou de) couche(s) intermédiaire(s) jusqu'au niveau du moule au moyen du dispositif de levage.

9. Procédé selon l'une quelconque des revendications précédentes, dans lequel l'étape consistant à agencer la pile constituée d'éléments prédurcis et d'une (ou de) couche(s) intermédiaire(s) dans la cavité du moule de semelle de longeron comporte les étapes consistant à :
- agencer la pile au-dessus de la cavité de moule du moule de semelle de longeron, et
- amener progressivement la surface de pile inférieure de la pile en contact avec la surface de la partie inférieure de moule de la cavité de moule, de préférence en commençant au niveau de la première extrémité de la pile et en finissant au niveau de la deuxième extrémité opposée de la pile, et simultanément, retirer progressivement les dispositifs de serrage de pile lâche espacés les uns par rapport aux autres de la pile avant toute mise en contact avec la partie inférieure de moule, de préférence en commençant par le dispositif de serrage de pile lâche le plus proche de la première extrémité de la pile et en finissant par le dispositif de serrage de pile lâche le plus proche de la deuxième extrémité opposée de la pile

10. Procédé selon l'une quelconque des revendications précédentes 1 à 8, dans lequel l'étape consistant à agencer la pile constituée d'éléments prédurcis et d'une (ou de) couche(s) intermédiaire(s) dans la cavité du moule de semelle de longeron comporte les étapes consistant à :
- agencer la pile au-dessus de la cavité de moule du moule de semelle de longeron sur une pluralité d'éléments de support espacés longitudinalement les uns par rapport aux autres, chaque élément de support supportant une partie de la pile, et retirer les dispositifs de serrage de la pile, et
- amener progressivement la surface de pile inférieure de la pile en contact avec la surface de la partie inférieure de moule de la cavité de moule, de préférence en commençant au niveau de la première extrémité de la pile et en finissant au niveau de la deuxième extrémité opposée de la pile, en retirant progressivement et simultanément les éléments de support, de préférence, en commençant au niveau de l'élément de support le plus proche de la première extrémité de la pile et en finissant au niveau de l'élément de support le plus proche de la deuxième extrémité opposée de la pile.

11. Procédé selon la revendication 10, dans lequel les éléments de support s'étendent dans le sens transversal par rapport au moule de semelle de longeron allongé et sont supportés par les faces supérieures des parois latérales du moule.

12. Procédé selon l'une quelconque des revendications précédentes, comportant l'étape consistant à enduire les surfaces de la partie inférieure de moule et les parois latérales de la cavité de moule par un revêtement glissant, tel qu'une couche pelable, avant d'agencer la pile constituée d'éléments prédurcis et d'une (ou de) couche(s) intermédiaire(s) dans la cavité du moule de semelle de longeron.

13. Procédé selon l'une quelconque des revendications précédentes, dans lequel l'étape consistant à infuser de la résine dans la pile constituée d'éléments prédurcis et d'une (ou de) couche(s) intermédiaire(s) dans le moule comporte les étapes consistant à : enduire la surface supérieure de la pile constituée d'éléments prédurcis et de couches intermédiaires au moyen d'un revêtement pelable, tel qu'une couche pelable, et recouvrir la cavité du moule de semelle de longeron au moyen d'un sac sous vide et infuser la résine par moulage par transfert de résine assisté par le vide (VARTM).

14. Procédé selon l'une quelconque des revendications précédentes, comportant les étapes consistant à effectuer une inspection de la pile durcie constituée d'éléments prédurcis et d'une (ou de) couche(s) intermédiaire(s) une fois que la pile durcie a été retirée du moule de semelle de longeron, effectuer toutes les réparations nécessaires au niveau de la pile durcie et envoyer la pile jusqu'au niveau du moule de la partie formant coque ou dans un lieu de stockage.

15. Système de fabrication d'une semelle de longeron (80) pour une partie formant pale d'éolienne (10), le système comportant une pluralité d'éléments allongés prédurcis (50) d'un matériau composite de résine renforcé de fibres comportant une première surface principale (51) et une deuxième surface principale opposée (52) et une première face latérale (53) et une deuxième face latérale opposée (55) et une première extrémité (63) et une deuxième extrémité opposée (65), et dans lequel les éléments prédurcis de la pluralité d'éléments prédurcis sont empilés avec une couche intermédiaire (57) d'un matériau fibreux allongé non durci qui est agencée entre la première surface principale et la deuxième surface principale d'éléments prédurcis successifs (50), pour ainsi former une pile (58) constituée d'éléments prédurcis et d'une (ou de) couche(s) intermédiaire(s), la pile ayant une surface de pile inférieure (79) et une surface de pile supérieure opposée (59), une première face de pile latérale (61) et une deuxième face de pile latérale opposée (63), et une première extrémité de pile (64) et une deuxième extrémité de pile opposée (65), dans lequel au moins les faces latérales des éléments prédurcis sont alignées et maintenues alignées au moyen de dispositifs de serrage de pile lâche espacés longitudinalement les uns par rapport aux autres,
le système comportant :
- un moule de semelle de longeron (66, 67) comportant une partie inférieure de moule et des parois latérales de moule, et
- un dispositif de levage tel qu'une poutre de levage (67, 68) adaptée pour déplacer la pile constituée d'éléments prédurcis et d'une (ou de) couche(s) intermédiaire(s),
dans lequel le système est adapté pour :
- relier le dispositif de levage aux dispositifs de serrage de pile lâche,
- déplacer la pile (58) constituée d'éléments prédurcis (50) et d'une (ou de) couche(s) intermédiaire(s) (57) avec le dispositif de levage, jusqu'au niveau du moule de semelle de longeron,
- agencer la pile constituée d'éléments prédurcis et d'une (ou de) couche(s) intermédiaire(s) dans la cavité du moule de semelle de longeron,
- infuser de la résine jusque dans la pile constituée d'éléments prédurcis et de couches intermédiaires dans le moule,
- laisser la résine durcir pour former une pile durcie constituée d'éléments prédurcis et d'une (ou de) couche(s) intermédiaire(s) formant une semelle de longeron,
- retirer la pile durcie constituée d'éléments prédurcis et d'une (ou de) couche(s) intermédiaire(s) du moule, c.-à-d. démouler la pile.
